(19) Europäisches Patentamt / European Patent Office / Office européen des brevets

(11) **EP 4 737 247 A1**

(12) **EUROPEAN PATENT APPLICATION**
published in accordance with Art. 153(4) EPC

(43) Date of publication:
06.05.2026 Bulletin 2026/19

(21) Application number: 24847761.4

(22) Date of filing: 05.06.2024

(51) International Patent Classification (IPC):
*B60W 30/18* (2012.01)  *B60W 40/02* (2006.01)
*B60W 40/105* (2012.01)

(52) Cooperative Patent Classification (CPC):
B60W 30/18; B60W 40/02; B60W 40/105

(86) International application number:
PCT/CN2024/097456

(87) International publication number:
WO 2025/025798 (06.02.2025 Gazette 2025/06)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 28.07.2023 CN 202310945780

(71) Applicant: Shenzhen Yinwang Intelligent Technologies Co., Ltd.
Shenzhen, Guangdong 518110 (CN)

(72) Inventors:
• MENG, Yue
Shenzhen, Guangdong 518129 (CN)

• DING, Yixiu
Shenzhen, Guangdong 518129 (CN)
• CHEN, Zhi
Shenzhen, Guangdong 518129 (CN)
• JIANG, Yang
Shenzhen, Guangdong 518129 (CN)
• LIU, Xiaoxue
Shenzhen, Guangdong 518129 (CN)
• LI, Jun
Shenzhen, Guangdong 518129 (CN)
• DAI, Zhengchen
Shenzhen, Guangdong 518129 (CN)

(74) Representative: Pfenning, Meinig & Partner mbB Patent- und Rechtsanwälte
Theresienhöhe 11a
80339 München (DE)

(54) **CONTROL METHOD AND DEVICE, AND VEHICLE**

(57) A control method and apparatus, and a vehicle are provided. The method may be applied to the field of intelligent driving. The method includes: obtaining information about an obstacle around a vehicle and road environment information; determining a speed of the vehicle based on the information about the obstacle and the road environment information; and controlling the vehicle based on the speed. The method may be applied to an intelligent vehicle or an electric vehicle. A speed that better meets a current scenario in which the vehicle is located is output, to help improve driving experience of a user.

200

| |
|---|
| Obtain information about a first obstacle around a vehicle and first road environment information — S210 |
| Determine a first speed of the vehicle based on the information about the first obstacle and the first road environment information — S220 |
| Control the vehicle based on the first speed — S230 |

FIG. 2

## Description

This application claims priority to Chinese Patent Application No. 202310945780.6, filed with the China National Intellectual Property Administration on July 28, 2023 and entitled "CONTROL METHOD AND APPARATUS, AND VEHICLE", which is incorporated herein by reference in its entirety.

## TECHNICAL FIELD

This application relates to the field of intelligent driving, and more specifically, to a control method and apparatus, and a vehicle.

## BACKGROUND

In a traveling process of a vehicle, a road speed limit value may be usually directly provided by map data, or may be obtained by sensing speed limit sign information in real time. However, the road speed limit value may be incorrectly marked in the map data. In addition, even if the map data is correctly marked or correct speed limit information is directly obtained through real-time sensing, the map data or the speed limit information may not conform to a current scenario in which the vehicle is located (or not conform to a human driving habit). For example, at some ramps of highways, traveling at a speed marked on a map may cause traffic congestion.

Therefore, how to determine a speed that is more suitable for a current scenario in which a vehicle is located (or that is more human-like) becomes an urgent problem to be resolved.

## SUMMARY

This application provides a control method and apparatus, and a vehicle, to output a speed that meets a current scenario in which the vehicle is located (or that is more human-like), thereby helping improve driving experience of a user.

According to a first aspect, this application provides a control method. The method includes: obtaining information about a first obstacle around a vehicle and first road environment information; determining a first speed of the vehicle based on the information about the first obstacle and the first road environment information; and controlling the vehicle based on the first speed.

Based on the foregoing technical solution, the vehicle may determine a speed of the vehicle based on information about an obstacle and road environment information, to control traveling of the vehicle based on the speed of the vehicle. In this way, the speed of the vehicle is combined with the information about the surrounding obstacle and the road environment information, so that the speed is more suitable for a current scenario in which the vehicle is located, or is more similar to an actual speed in a human driving scenario. This helps improve driving experience of the user.

The first speed may be a first speed limit value of the vehicle corresponding to the information about the first obstacle and the first road environment information, or the first speed limit value may be determined based on the first speed.

In some possible implementations, the information about the first obstacle includes one or more of a location, a speed, an acceleration, a heading angle, a type (for example, a truck, a bus, or a car), a size, and turn light information of the first obstacle. The first obstacle may include one or more obstacles. For example, the first obstacle may be another vehicle around the vehicle.

In some possible implementations, the first road environment information includes a quantity of lanes on a road on which the vehicle is located, an attribute of a lane, a topology structure, or the like.

In some possible implementations, the controlling the vehicle includes: controlling a prompt apparatus in the vehicle to indicate the first speed.

In some possible implementations, the first obstacle may be an obstacle in a region of interest (region of interest, ROI) of the vehicle. Alternatively, the first obstacle may include an obstacle that is not screened around the vehicle.

In some possible implementations, when there is no obstacle around the vehicle, the vehicle may be controlled based on a speed limit value indicated by map data.

In some possible implementations, the controlling the vehicle based on the first speed includes: controlling the vehicle to travel at the first speed.

With reference to the first aspect, in some implementations of the first aspect, the determining a first speed of the vehicle based on the information about the first obstacle and the first road environment information includes: inputting the information about the first obstacle and the first road environment information into a model to obtain the first speed of the vehicle, where the model is obtained through training based on a sample data set, and the sample data set includes information about an obstacle around a sample vehicle, road environment information around the sample vehicle, and a speed of the sample vehicle.

Based on the foregoing technical solution, the information about the obstacle and the road environment information are input into the model, so that the speed of the vehicle can be output. In this way, generalization during speed determining can be improved. In addition, the output speed information is combined with the information about the surrounding obstacle and the road environment information, so that the speed is more suitable for a current scenario in which the vehicle is located, or is more similar to an actual speed in a human driving scenario. This helps improve driving experience of the user.

For example, at a curve with a high speed limit value and a large curvature that are indicated by the map data, an output speed may be lower than the speed limit value indicated by the map data by combining the information about the surrounding obstacle and the road environment information, so that it can be ensured that the vehicle safely passes through the curve.

With reference to the first aspect, in some implementations of the first aspect, the information about the first obstacle includes a speed of the first obstacle, and the determining a first speed of the vehicle based on the information about the first obstacle and the first road environment information includes: determining a weight of the first obstacle based on the first road environment information and/or the information about the first obstacle; and determining the first speed based on the weight of the first obstacle and the speed of the first obstacle.

Based on the foregoing technical solution, the speed of the vehicle may be determined with reference to a weight of the obstacle and a speed of the obstacle. In this way, the speed of the vehicle is combined with the weight of the surrounding obstacle and the speed of the obstacle, so that the speed is more suitable for a current scenario in which the vehicle is located, or is more similar to an actual speed in a human driving scenario. This helps improve driving experience of the user.

With reference to the first aspect, in some implementations of the first aspect, the obtaining information about a first obstacle around a vehicle includes: obtaining a plurality of obstacles around the vehicle; and determining the first obstacle from the plurality of obstacles based on the first road environment information and/or information about each of the plurality of obstacles.

Based on the foregoing technical solution, the first obstacle may be screened from the plurality of obstacles by using the first road environment information and/or the information about each obstacle. In this way, it can be ensured that the screened first obstacle is an obstacle that affects the speed of the vehicle. This helps improve accuracy of the speed of the vehicle.

In some possible implementations, the determining the first obstacle from the plurality of obstacles based on the first road environment information includes: determining the first obstacle from the plurality of obstacles based on attribute information of a plurality of lanes (for example, the lane is a straight lane, a left-turn lane, a right-turn lane, a straight and left-turn lane, a straight and right-turn lane, or a U-turn lane) on a road on which the vehicle is located.

In some possible implementations, the determining the first obstacle from the plurality of obstacles based on information about each of the plurality of obstacles includes: determining the first obstacle from the plurality of obstacles based on a heading angle of the vehicle and a heading angle of each of the plurality of obstacles and/or a speed of each obstacle.

With reference to the first aspect, in some implementations of the first aspect, the information about the first obstacle and the first road environment information are information obtained at a first moment, and the method further includes: obtaining information about a second obstacle around the vehicle and second road environment information before the first moment; determining a second speed of the vehicle based on the information about the second obstacle and the second road environment information; and the controlling the vehicle based on the first speed includes: determining a third speed based on the first speed and the second speed; and controlling the vehicle based on the third speed.

Based on the foregoing technical solution, when the vehicle is controlled, the third speed may be determined with reference to a speed output at a current moment and a speed output at one or more moments before the current moment. In this way, for a vehicle in an autonomous driving status, the output speed can be more stable. This helps avoid a sudden change of a behavior of the vehicle caused by a speed change, thereby improving driving experience of a user. For a manually driven vehicle, this helps avoid a distraction of a driver caused by frequent speed changes.

In some possible implementations, the controlling the vehicle includes: controlling the prompt apparatus in the vehicle to indicate the third speed.

In some possible implementations, the controlling the vehicle based on the third speed includes: controlling the vehicle to travel at the first speed.

With reference to the first aspect, in some implementations of the first aspect, the method further includes: performing stepping processing on the first speed to obtain a fourth speed; and controlling the vehicle based on the fourth speed.

Based on the foregoing technical solution, stepping processing may be performed on a determined speed. In this way, for a vehicle in an autonomous driving status, the determined speed can be more stable. This helps avoid a sudden change of a behavior of the vehicle caused by a speed change, thereby improving driving experience of the user. For a manually driven vehicle, this helps avoid a distraction of a driver caused by frequent speed changes.

In some possible implementations, the controlling the vehicle based on the fourth speed includes: controlling the vehicle to travel at the fourth speed.

With reference to the first aspect, in some implementations of the first aspect, before the controlling the vehicle based on the fourth speed, the method further includes: determining that the fourth speed is within a preset speed range, where the preset speed range is determined based on a speed limit value indicated by map data.

Based on the foregoing technical solution, before the vehicle is controlled, it may be determined that the fourth speed obtained through post-processing is within the preset speed range, so that a safety risk caused by overspeed traveling of the vehicle due to an excessively high speed can be avoided. In addition, traffic congestion caused by an excessively slow vehicle due to an excessively low speed can be avoided.

For example, a maximum value of the preset speed range may be a sum of the speed limit value indicated by the map data and a preset value, or the maximum value of the preset speed range may be a product of the speed limit value indicated by the map data and a preset coefficient.

In some possible implementations, when the fourth speed is greater than the maximum value of the preset speed range, the fourth speed is determined as the maximum value; or when the fourth speed is less than a minimum value of the preset speed range, the fourth speed is determined as the minimum value.

With reference to the first aspect, in some implementations of the first aspect, the method further includes: controlling a prompt apparatus to indicate the fourth speed.

Based on the foregoing technical solution, the fourth speed is indicated to the user, so that the user can know an actual speed of the current vehicle. For a vehicle in the autonomous driving status, the user may determine, based on a speed indicated by the prompt apparatus, whether to take over the vehicle. For a manually driven vehicle, the user may control, based on the speed indicated by the prompt apparatus, the vehicle to accelerate or decelerate.

With reference to the first aspect, in some implementations of the first aspect, the method further includes: after preset duration starting when the first speed is obtained, obtaining information about a third obstacle around the vehicle and third road environment information; determining a fifth speed based on the information about the third obstacle and the third road environment information; and controlling the vehicle based on the fifth speed.

Based on the foregoing technical solution, the vehicle may not change the speed within the preset duration starting from outputting the first speed. This can avoid impact on driving experience of the user caused by frequent speed switching of the vehicle.

In some possible implementations, the controlling the vehicle based on the fifth speed includes: controlling the vehicle to travel at the fifth speed.

According to a second aspect, a control method is provided. The method includes: obtaining information about a plurality of obstacles around a vehicle; determining a target obstacle set from the plurality of obstacles based on road environment information of an environment in which the vehicle is located and/or information about each of the plurality of obstacles; weighting a speed of each obstacle in the target obstacle set to obtain a first speed; and controlling the vehicle based on the first speed.

With reference to the second aspect, in some implementations of the second aspect, a weight $w_i$ of each obstacle in the target obstacle set may be determined by using one or more of a distance $d_i$ between the vehicle and each obstacle, time to collision (time to collision, TTC) between the vehicle and each obstacle, and a lane in which each obstacle is located.

For example, a longer distance between the vehicle and an $i^{th}$ obstacle indicates a lower weight $w_i$, and a shorter distance between the vehicle and the $i^{th}$ obstacle indicates a higher weight $w_i$.

For another example, smaller TTC between the vehicle and the $i^{th}$ obstacle indicates a higher weight $w_i$, and larger TTC between the vehicle and the $i^{th}$ obstacle indicates a lower weight $w_i$.

For another example, a weight of an obstacle on a same lane as the vehicle is higher than a weight of an obstacle on a different lane from the vehicle.

According to a third aspect, a control apparatus is provided. The apparatus includes: an obtaining unit, configured to obtain information about a first obstacle around a vehicle and first road environment information; a determining unit, configured to determine a first speed of the vehicle based on the information about the first obstacle and the first road environment information; and a control unit, configured to control the vehicle based on the first speed.

With reference to the third aspect, in some implementations of the third aspect, the determining unit is configured to input the information about the first obstacle and the first road environment information into a model to obtain the first speed, where the model is obtained through training based on a sample data set, and the sample data set includes information about an obstacle around a sample vehicle, road environment information around the sample vehicle, and a speed of the sample vehicle.

With reference to the third aspect, in some implementations of the third aspect, the information about the first obstacle includes a speed of the first obstacle, and the determining unit is configured to: determine a weight of the first obstacle based on the first road environment information and/or the information about the first obstacle; and determine the first speed based on the weight of the first obstacle and the speed of the first obstacle.

With reference to the third aspect, in some implementations of the third aspect, the obtaining unit is configured to: obtain information about a plurality of obstacles around the vehicle; and determine the first obstacle from the plurality of obstacles based on the first road environment information and/or information about each of the plurality of obstacles.

With reference to the third aspect, in some implementations of the third aspect, the information about the first obstacle and the first road environment information are information obtained at a first moment; the obtaining unit is further configured to obtain information about a second obstacle around the vehicle and second road environment information before the first moment; the determining unit is further configured to determine a second speed of the vehicle based on the information about the second obstacle and the second road environment information; and the control unit is configured to: determine a third speed based on the first speed and the second speed; and control the vehicle based on the third speed.

With reference to the third aspect, in some implementations of the third aspect, the control unit is configured to: perform stepping processing on the first speed to obtain a fourth speed; and control the vehicle based on the fourth speed.

With reference to the third aspect, in some implementations of the third aspect, the apparatus further includes: the determining unit, configured to: before the control unit controls the vehicle based on the fourth speed, determine that the fourth speed is within a preset speed range, where the preset speed range is determined based on a speed limit value indicated by map data.

With reference to the third aspect, in some implementations of the third aspect, the control unit is configured to control a prompt apparatus to indicate the fourth speed.

With reference to the third aspect, in some implementations of the third aspect, the obtaining unit is further configured to: after preset duration starting when the first speed is obtained, obtain information about a third obstacle around the vehicle and third road environment information; the determining unit is further configured to determine a fifth speed based on the information about the third obstacle and the third road environment information; and the control unit is further configured to control the vehicle based on the fifth speed.

According to a fourth aspect, a control apparatus is provided. The apparatus includes: an obtaining unit, configured to obtain information about a plurality of obstacles around a vehicle; a determining unit, configured to determine a target obstacle set from the plurality of obstacles based on road environment information of an environment in which the vehicle is located and/or information about each of the plurality of obstacles; a data processing unit, configured to perform weighting processing on a speed of each obstacle in the target obstacle set to obtain a first speed of the vehicle; and a control unit, configured to control the vehicle based on the first speed.

According to a fifth aspect, this application provides a control apparatus. The apparatus includes a processing unit and a storage unit. The storage unit is configured to store instructions, and the processing unit executes the instructions stored in the storage unit, so that the apparatus performs any possible control method in the first aspect or the second aspect.

According to a sixth aspect, this application provides a control system. The control system includes a sensor and a computing platform. The computing platform includes any possible control apparatus in the third aspect, or includes the control apparatus in the fourth aspect, or includes the control apparatus in the fifth aspect.

With reference to the sixth aspect, in some implementations of the sixth aspect, the control system further includes a display apparatus.

With reference to the sixth aspect, in some implementations of the sixth aspect, the computing platform is located in a cloud server.

According to a seventh aspect, this application provides a vehicle. The vehicle includes any possible control apparatus in the third aspect, or includes the control apparatus in the fourth aspect, or includes the control apparatus in the fifth aspect, or includes the control system in the sixth aspect.

According to an eighth aspect, this application provides a server. The server includes any possible control apparatus in the third aspect, the fourth aspect, or the fifth aspect.

According to a ninth aspect, this application provides a computer program product, where the computer program product includes computer program code. When the computer program code is run on a computer, the computer is enabled to perform any possible control method in the first aspect or the second aspect.

It should be noted that all or a part of the computer program code may be stored in a first storage medium. The first storage medium may be packaged together with a processor, or may be packaged separately from a processor. This is not specifically limited in this embodiment of this application.

According to a tenth aspect, this application provides a computer-readable medium, where the computer-readable medium stores program code. When the computer program code is run on a computer, the computer is enabled to perform any possible control method in the first aspect or the second aspect.

According to an eleventh aspect, this application provides a chip. The chip includes a circuit, and the circuit is configured to perform any possible control method in the first aspect or the second aspect.

## BRIEF DESCRIPTION OF DRAWINGS

FIG. 1 is a functional block diagram of a vehicle according to an embodiment of this application;
FIG. 2 is a schematic flowchart of a control method according to an embodiment of this application;
FIG. 3 is a diagram of an application scenario according to an embodiment of this application;
FIG. 4 is another diagram of an application scenario according to an embodiment of this application;
FIG. 5 is a diagram of a model inference process according to an embodiment of this application;
FIG. 6 is a diagram of stepping processing according to an embodiment of this application;
FIG. 7 shows a human machine interface HMI according to an embodiment of this application;
FIG. 8 is a schematic flowchart of a control method according to an embodiment of this application;
FIG. 9 is a block diagram of a control apparatus according to an embodiment of this application; and
FIG. 10 is another block diagram of a control apparatus according to an embodiment of this application.

## DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

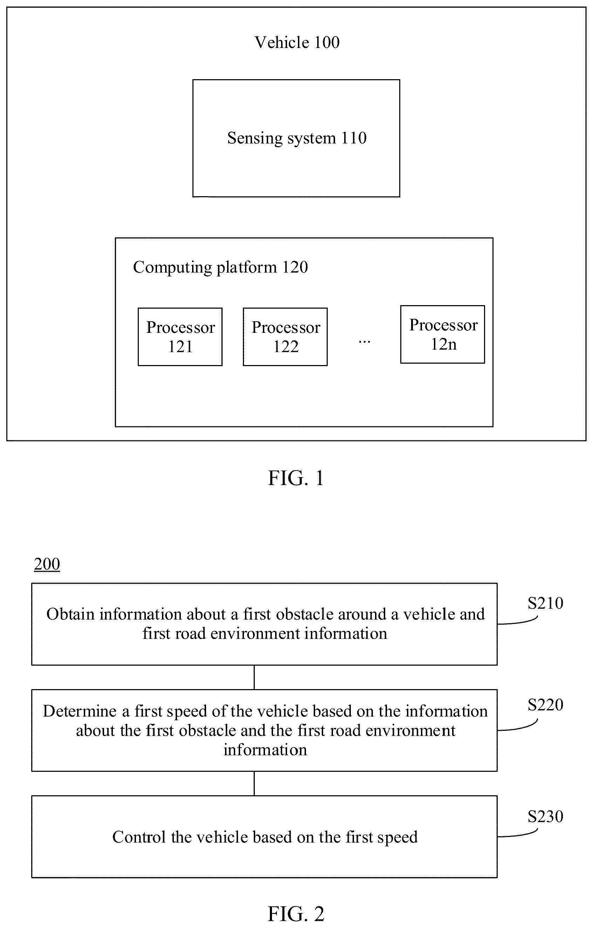

FIG. 1 is a functional block diagram of a vehicle 100 according to an embodiment of this application. The vehicle 100 may include a sensing system 110 and a computing platform 120. The sensing system 110 may include one or more sensors that sense information about an ambient environment of the vehicle 100. For example, the sensing system 110 may include a positioning system. The positioning system may be a global positioning system (global positioning system, GPS), a BeiDou system, or another positioning system. The sensing system 110 may further include one or more of the following: an inertial measurement unit (inertial measurement unit, IMU), a lidar, a millimeter-wave radar, an ultrasonic radar, and a camera apparatus.

Some or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

The vehicle in embodiments of this application is a vehicle in a broad sense, and may be a transportation tool (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

As described above, in a traveling process of a vehicle, a road speed limit value may be usually directly provided by map data, or may be obtained by sensing speed limit sign information in real time. However, the road speed limit value may be incorrectly marked in the map data. In addition, even if the map data is correctly marked or correct speed limit information is directly obtained through real-time sensing, the map data or the speed limit information may not conform to a current scenario in which the vehicle is located (or not conform to a human driving habit).

For example, a speed limit value marked in the map data at a curve of some highways with a large curvature is high. If a vehicle in an autonomous driving status travels based on the speed limit value marked in the map data, the vehicle may be out of control.

For another example, a speed limit value marked in the map data on a ramp of a highway is low. If a vehicle in the autonomous driving status travels based on the speed limit value marked in the map data, congestion may occur.

When handling the foregoing problem, a human driver usually travels at a similar speed with reference to a speed of a surrounding vehicle flow around the vehicle, to avoid a problem of an excessively high speed or an excessively low speed. Therefore, with reference to the processing method of the human driver, the speed of the vehicle may be dynamically corrected based on the speed of the surrounding vehicle flow, so that a behavior of the vehicle in the autonomous driving status is more human-like, or the behavior of the vehicle in the autonomous driving status is more suitable for a current scenario in which the vehicle is located. In an existing vehicle speed determining method, only the speed limit value indicated by the map data or a road speed limit value determined by using data collected by a sensor is considered, and vehicle flow information (or information about an obstacle around the vehicle) is not considered. Therefore, it is difficult to form a human-like speed (or a road speed limit value) correction. In addition, application scenarios are limited.

To resolve the foregoing problem, embodiments of this application provide a control method and apparatus, and a vehicle. A more human-like speed is output with reference to a speed of a surrounding vehicle flow by imitating a practice of a human driver in processing an improper road speed limit value. This helps improve driving experience of a user.

FIG. 2 is a schematic flowchart of a control method 200 according to an embodiment of this application. The method 200 may be performed by the vehicle 100 shown in FIG. 1, or the method 200 may be performed by the computing platform 120, or the method 200 may be performed by a system including the computing platform 120 and a sensor, or the method 200 may be performed by a system-on-chip (system-on-chip, SoC) in the computing platform 120, or the method 200 may be performed by a processor, a circuit, or a chip in the computing platform 120, or the method 200 may be performed by a server. The method 200 includes the following steps.

S210: Obtain information about a first obstacle around a vehicle and first road environment information.

Optionally, the information about the first obstacle includes one or more of a location, a speed, an acceleration, a heading angle, a type (for example, a truck, a bus, or a car), a size, and turn light information of the first obstacle.

The first obstacle may include one or more obstacles. For example, the first obstacle may be another vehicle around the vehicle.

Optionally, if the method 200 is performed by the vehicle, the obtaining information about a first obstacle around a vehicle and first road environment information includes: determining the information about the first obstacle and the first road environment information based on data collected by a sensor (for example, one or more of a camera, a lidar, and a millimeter-wave radar).

Optionally, if the method 200 is performed by the vehicle, the obtaining information about a first obstacle around a vehicle and first road environment information includes: The vehicle sends, to a cloud server, the data collected by the sensor of the vehicle; and the vehicle receives the information about the first obstacle and the first road environment information that are determined by the cloud server based on the data.

Optionally, the first road environment information includes a quantity of lanes on a road on which the vehicle is located, an attribute of a lane, a topology structure, or the like.

Optionally, an ROI may be determined based on a location of the vehicle, and whether the obstacle around the vehicle is located in the ROI is determined based on a location of the obstacle around the vehicle relative to the vehicle. For example, the obstacle located in the ROI may be determined as the first obstacle.

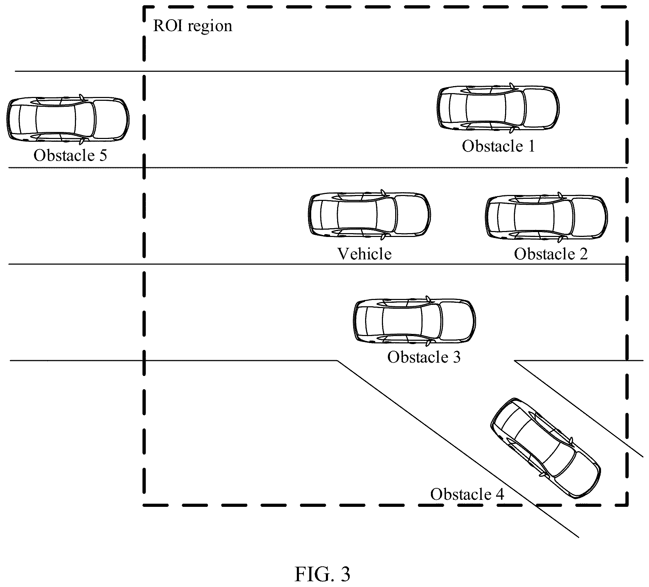

For example, FIG. 3 is a diagram of an application scenario according to an embodiment of this application. The vehicle is surrounded by an obstacle 1, an obstacle 2, an obstacle 3, an obstacle 4, and an obstacle 5. The obstacle 1, the obstacle 2, the obstacle 3, and the obstacle 4 are located in the ROI region. The vehicle may determine the obstacle 1, the obstacle 2, the obstacle 3, and the obstacle 4 as the first obstacle.

Alternatively, the vehicle may select the obstacles based on the information about the obstacle. For example, speeds of the obstacle 1, the obstacle 2, and the obstacle 3 are all greater than 5 km/h, a difference between a heading angle of each of the obstacle 1, the obstacle 2, and the obstacle 3 and a heading angle of the vehicle is less than 10°, a speed of the obstacle 4 is greater than 5 km/h, and a difference between a heading angle of the obstacle 4 and the heading angle of the vehicle is greater than 10°. In this case, the vehicle may select the obstacle 1, the obstacle 2, and the obstacle 3 from the plurality of obstacles, or the obstacle 1, the obstacle 2, and the obstacle 3 are obstacles that may be used to determine a speed of the vehicle.

Optionally, the obtaining information about a first obstacle around a vehicle includes: obtaining a plurality of obstacles around the vehicle; and determining the first obstacle from the plurality of obstacles based on the first road environment information and/or the vehicle and information about each of the plurality of obstacles.

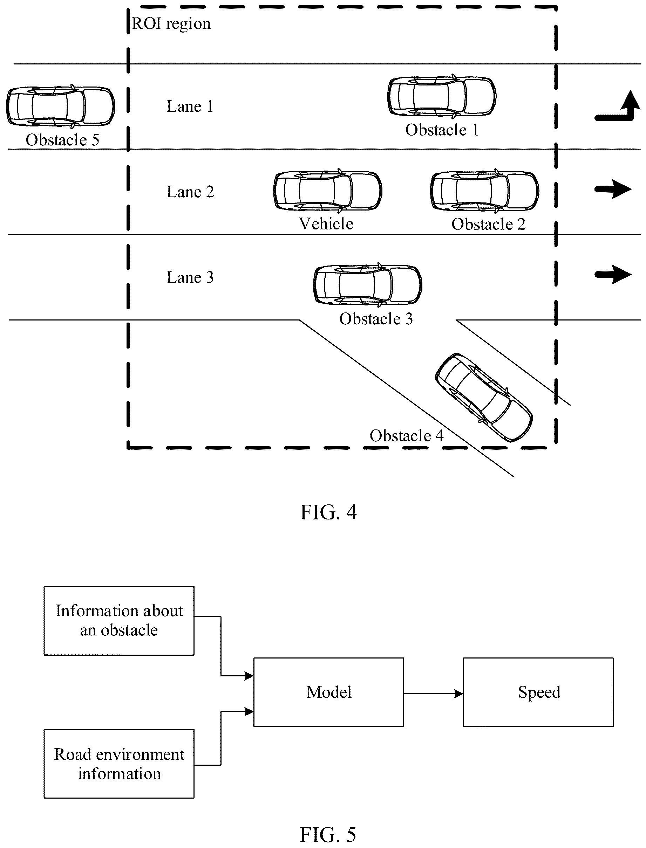

For example, FIG. 4 is a diagram of an application scenario according to an embodiment of this application. The first road environment information includes an attribute of each lane (for example, a lane 1 is a left-turn lane, and a lane 2 and a lane 3 are straight lanes). In this case, the vehicle determines the first obstacle from the plurality of obstacles based on the attribute of each lane. For example, the obstacle 1 is located in the lane 1, the vehicle and the obstacle 2 are located in the lane 2, and the obstacle 3 is located in the lane 3. Because the lane 1 is the left-turn lane, and the obstacle 1 is about to turn left in a future period of time, the vehicle may select the obstacle 2 and the obstacle 3 from the plurality of obstacles, or the obstacle 2 and the obstacle 3 are obstacles that may be used to determine the speed of the vehicle.

Optionally, as shown in FIG. 4, if a distance between the obstacle 1 and an intersection is greater than or equal to a preset distance (for example, 50 meters), it may be determined that the obstacle 1, the obstacle 2, and the obstacle 3 are obstacles that may be used to determine the speed of the vehicle. If the distance between the obstacle 1 and the intersection is less than the preset distance, it may be determined that the obstacle 2 and the obstacle 3 are obstacles that can be used to determine the speed of the vehicle.

Optionally, the determining the first obstacle from the plurality of obstacles based on information about each of the plurality of obstacles includes: determining the first obstacle from the plurality of obstacles based on a speed and/or a heading angle of each of the plurality of obstacles.

For example, the first obstacle is an obstacle whose speed is greater than or equal to a preset speed in the plurality of obstacles, and/or the first obstacle is an obstacle in which a difference between a heading angle of the obstacle and the heading angle of the vehicle is less than or equal to a preset difference in the plurality of obstacles.

For example, the preset speed is 5 km/h, and the preset difference is 10°.

Optionally, the vehicle determines the first obstacle from the plurality of obstacles based on the attribute of each lane and the information about each of the plurality of obstacles.

For example, as shown in FIG. 4, a speed of the obstacle 2 is 50 km/h, a difference between a heading angle of the obstacle 2 and the heading angle of the vehicle is less than or equal to 10°, a speed of the obstacle 3 is 0, and a difference between a heading angle of the obstacle 3 and the heading angle of the vehicle is less than or equal to 10°. In this case, the vehicle may select the obstacle 2 from the plurality of obstacles, or the obstacle 2 is an obstacle that can be used to determine the speed.

S220: Determine a first speed of the vehicle based on the information about the first obstacle and the first road environment information.

The determined first speed may be a speed limit value of the vehicle, or the first speed may be used to determine a current speed limit value of the vehicle. For example, when it is determined, based on the information about the first obstacle and the first road environment information, that the first speed is 50 km/h, it may be determined that the current speed limit value of the vehicle is 50 km/h, or it may be determined that a current maximum traveling speed of the vehicle is less than or equal to the first speed plus a preset speed (for example, 20 km/h), in other words, the current maximum traveling speed of the vehicle is less than or equal to 70 km/h.

Optionally, the determining a first speed of the vehicle based on the information about the first obstacle and the first road environment information includes: inputting the information about the first obstacle and the first road environment information into a model to obtain the first speed, where the model is obtained through training based on a sample data set, and the sample data set includes information about an obstacle around a sample vehicle, road environment information around the sample vehicle, and a speed of the sample vehicle.

FIG. 5 is a diagram of a model inference process according to an embodiment of this application. As shown in FIG. 5, input of a model may include information about an obstacle and road environment information. The information about the obstacle includes one or more of a location, a speed, an acceleration, a heading angle, a type (for example, a truck, a bus, or a car), a size, and turn light information of the obstacle around a vehicle. Output of the model may include a speed of the vehicle.

The foregoing model may be a neural network (neural network, NN) model, for example, a transformer, a multi-layer perceptron (multi-layer perceptron, MLP), a residual neural network (residual neural network, ResNet) model, or a recurrent neural network (recurrent neural network, RNN) model. Alternatively, the foregoing model may be another machine learning algorithm, for example, a support vector machine (support vector machine, SVM) or a decision tree.

The foregoing model may be obtained through training by using the information about the obstacle around the sample vehicle, the road environment information around the sample vehicle, and the speed of the sample vehicle. The speed of the sample vehicle is a marked speed. For example, the speed of the sample vehicle may be a real speed of the sample vehicle, or the speed of the sample vehicle may be an average speed or a maximum speed of the sample vehicle within preset duration before the information about the obstacle around the sample vehicle and the road environment information are collected.

In a model training phase, model training may be performed by using the following two sample training data sets.

(1) The obstacle around the sample vehicle may include all obstacles in an ROI determined based on a location of the sample vehicle.
If the sample data set used in the model training phase includes information about all the obstacles in the ROI, the vehicle may input the information about all the obstacles in the ROI of the vehicle and the road environment information into the model in a model inference phase. For example, as shown in FIG. 3, in the model inference phase, information about the obstacle 1, the obstacle 2, the obstacle 3, and the obstacle 4, and the road environment information may be input into the model, to obtain the speed of the vehicle.
(2) The obstacle around the sample vehicle may include an obstacle selected based on the road environment information and/or the information about the obstacle.

If the sample data set used in the model training phase includes the obstacle selected based on the road environment information and/or the information about the obstacle, in the model inference phase, the vehicle may first select an obstacle in the ROI based on the road environment information of the vehicle and/or the information about the obstacle, to obtain the selected obstacle. The vehicle may input information about the selected obstacle and the road environment information into the model. For example, as shown in FIG. 4, in the model inference phase, the information about the obstacle 2 and the obstacle 3 and the road environment information may be input into the model, to obtain the speed of the vehicle.

In the foregoing model training phase, a loss function of the model may be a regression loss function like a mean squared error (mean squared error, MSE) loss function, or the loss function may be a classification loss function like a cross entropy loss (cross entropy loss) function.

Optionally, the sample training data set further includes a speed limit value indicated by map data and a reason why the speed of the sample vehicle is greatly different from the speed limit value indicated by the map data. For example, road environment information and information about an obstacle that are collected in a frame in the sample training data set may be labeled. The label indicates that the sample vehicle is located on a ramp of a highway, and a reason why the speed of the sample vehicle is greatly different from a speed limit value of the ramp indicated in the map data is that an excessively low speed limit value causes congestion. Alternatively, the label indicates that the sample vehicle is located at a curve with a large curvature radius of the highway, and a reason why the speed of the sample vehicle is greatly different from the speed limit value of a ramp indicated in the map data is that an excessively high speed limit value affects driving safety of a user. In this way, when a difference between the speed limit value output by the model and the speed limit value indicated by the map data is large, the vehicle may further output the reason why the speed of the vehicle is greatly different from the speed limit value indicated by the map data.

Optionally, the determining a first speed of the vehicle based on the information about the first obstacle and the first road environment information includes: determining a weight of the first obstacle based on the first road environment information and/or the information about the first obstacle; and determining the first speed based on the weight of the first obstacle and a speed of the first obstacle.

For example, the first obstacle includes a plurality of obstacles, and a weight of each of the plurality of obstacles may be determined based on the first road environment information and/or the information about the first obstacle. The first speed of the vehicle is determined based on the weight of each of the plurality of obstacles and a speed of each obstacle.

For example, the first obstacle includes the plurality of obstacles, and the determining a first speed of the vehicle based on the information about the first obstacle and the first road environment information includes: determining an average value of speeds of the plurality of obstacles as the first speed.

For example, the determining a first speed of the vehicle based on the information about the first obstacle and the first road environment information includes: when determining, based on the first road environment information, that the vehicle is currently located in a preset scenario (for example, a ramp of a highway or a curve whose curvature radius is greater than a preset radius), determining the first speed based on the speed of the first obstacle.

S230: Control the vehicle based on the first speed.

This embodiment of this application may be applied to a vehicle in an autonomous driving status. For example, when it is detected that the vehicle enables navigation cruise assistant (navigation cruise assistant, NCA) and integrated cruise assistant (integrated cruise assistant, ICA) functions, it may be determined that the vehicle is in the autonomous driving status. In this case, the vehicle may make a decision and plan a behavior of the vehicle based on the first speed, such as a preemption or yielding decision, a lane change decision, speed planning, and controlling a prompt apparatus to prompt the user.

This embodiment of this application may also be applied to a manually driven vehicle. For example, the user may be prompted after a speed of the vehicle is determined, so that the user controls, based on the speed indicated by the prompt apparatus, the vehicle to accelerate or decelerate.

Optionally, the controlling the vehicle based on the first speed includes: obtaining information about a second obstacle around the vehicle and second road environment information; determining a second speed of the vehicle based on the information about the second obstacle and the second road environment information; determining a third speed based on the first speed and the second speed; and controlling the vehicle to travel based on the third speed.

In this embodiment of this application, after the speed of the vehicle is determined, filtering may be further performed on the speed, to reduce fluctuation of an output result with time.

For example, a filtered speed may be determined according to the following formula (1):

$$\hat{v}_{limit,t} = \frac{1}{T} \sum_{\tau=0}^{T-1} v_{limit,t-\tau} \qquad (1)$$

Herein, $\hat{v}_{limit,t}$ is a speed (or a speed limit value) obtained through filtering, t is a current moment, $v_{limit,t-\tau}$ is a speed (or a speed limit value) output by the model at each moment or a speed (or a speed limit value) before filtering, T is a preset value, and $\tau$ may change based on a preset step. For example, if T is 10, it indicates that speeds at 10 moments need to be averaged, where the 10 moments may include the current moment and nine moments before the current moment. $\tau$ represents each of the 10 moments.

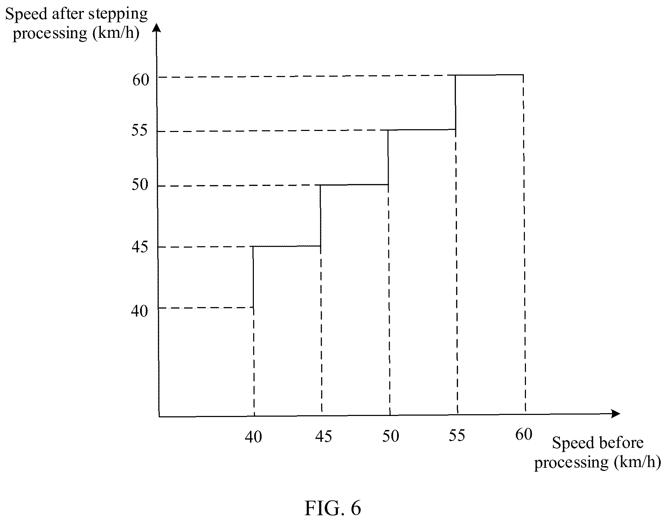

Optionally, the method 200 further includes: performing stepping processing on the first speed to obtain a fourth speed; and controlling the vehicle to travel based on the fourth speed. For example, FIG. 6 is a diagram of stepping processing according to an embodiment of this application. For example, when the speed output by the model is within (45 km/h, 50 km/h], it may be determined that a final speed is 50 km/h.

Optionally, before the controlling the vehicle to travel based on the fourth speed, the method further includes: determining that the fourth speed is within a preset speed range, where the preset speed range is determined based on the speed limit value indicated by the map data.

For example, as shown in FIG. 6, the processed speed is within a preset speed limit value range [40 km/h, 60 km/h]. If the speed determined in S220 is 65 km/h, the processed speed may be 60 km/h. If the speed determined in S220 is 35 km/h, the processed speed may be 40 km/h.

For example, the preset speed range may be determined based on the speed limit value indicated by the map data. For example, a maximum value of the preset speed range may be a sum of the speed limit value indicated by a map and a preset value, or the maximum value may be a product of the speed limit value indicated by the map and a preset coefficient (for example, 1.2). A minimum value of the preset speed range may be the speed limit value indicated by the map data, or the minimum value may be a preset value (for example, 40 km/h).

For example, if the speed limit value indicated by the map data is 40 km/h, the preset speed range may be [40 km/h, 60 km/h]. For another example, if the speed limit value indicated by the map data is 100 km/h, the preset speed range may be [100 km/h, 120 km/h].

Optionally, the method 200 further includes: after preset duration starting when the first speed is obtained, obtaining information about a third obstacle around the vehicle and third road environment information, where the second moment is a moment after the first moment; determining a fifth speed based on the information about the third obstacle and the third road environment information; and controlling the vehicle based on the fifth speed.

In the foregoing manner of performing post-processing on the speed output by the model, the vehicle in the autonomous driving status can be controlled to travel at a more stable speed. For the manually driven vehicle, frequent speed switching can be avoided to avoid distracting attention of a driver.

Optionally, the controlling the vehicle includes: controlling the prompt apparatus to indicate the first speed.

For example, the prompt apparatus includes but is not limited to a display apparatus, a speaker, and the like.

Optionally, if the method 200 is performed by a server, the server may obtain data that is collected by a sensor and that is sent by the vehicle, and obtain the information about the first obstacle around the vehicle and the first road environment information based on the data collected by the sensor. The server may determine the first speed of the vehicle based on the information about the first obstacle and the first road environment information. The server may generate a vehicle control instruction based on the first speed, and send the vehicle control instruction to the vehicle.

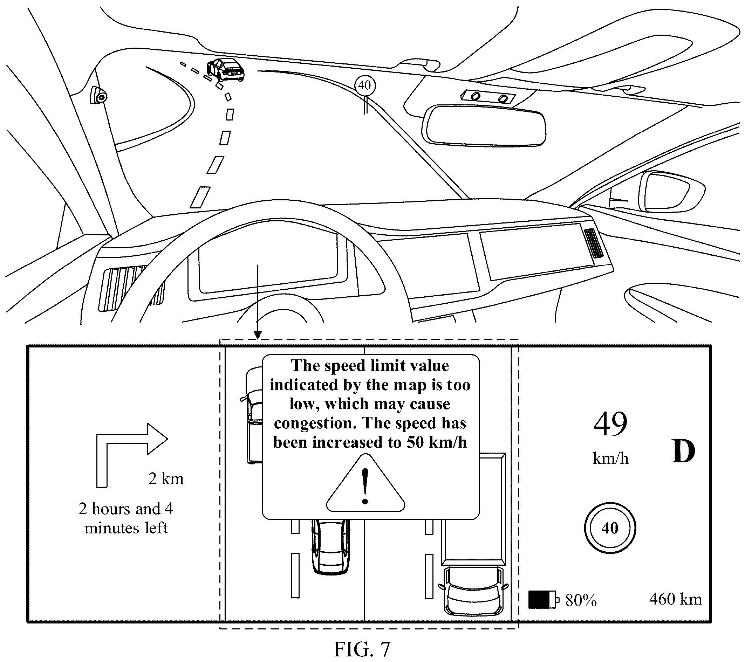

FIG. 7 shows a human machine interface (human machine interface, HMI) according to an embodiment of this application.

As shown in FIG. 7, map data indicates that a speed limit value of a ramp is 40 km/h. After the vehicle enters a ramp, it may be learned, based on information about a surrounding obstacle and road environment information, that the speed of the vehicle is 50 km/h. In addition, prompt information "The speed limit value indicated by the map is too low, which may cause congestion. The speed has been increased to 50 km/h." may be further displayed.

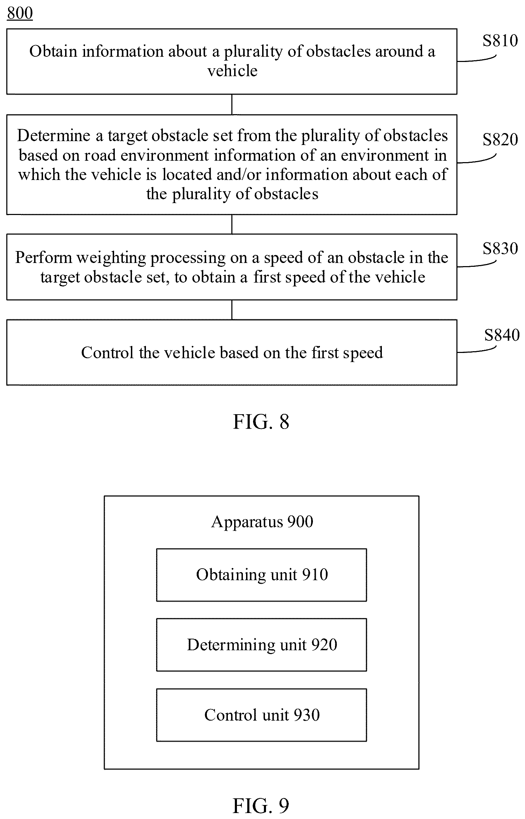

FIG. 8 is a schematic flowchart of a control method 800 according to an embodiment of this application. The method 800 may be performed by the vehicle 100 shown in FIG. 1, or the method 800 may be performed by the computing platform 120, or the method 800 may be performed by a system including the computing platform 120 and a sensor, or the method 800 may be performed by a SoC in the computing platform 120, or the method 800 may be performed by a processor, a circuit, or a chip in the computing platform 120, or the method 800 may be performed by a server. The method 800 includes the following steps.

S810: Obtain information about a plurality of obstacles around a vehicle.

S820: Determine a target obstacle set from the plurality of obstacles based on road environment information of an environment in which the vehicle is located and/or information about each of the plurality of obstacles.

For a process in which the vehicle determines the target obstacle set from the plurality of obstacles based on the road environment information and/or the information about each of the plurality of obstacles in S820, refer to the descriptions in S210. Details are not described herein again.

S830: Perform weighting processing on a speed of an obstacle in the target obstacle set, to obtain a first speed of the vehicle.

For example, weighted averaging may be performed on speeds of the obstacles in the target obstacle set by using the following formula (2):

$$v_{limit} = \frac{1}{N} \sum_i w_i v_i \qquad (2)$$

$v_{limit}$ represents a speed (or a speed limit value) of the vehicle, N is a quantity of the obstacles in the target obstacle set and N is a positive integer, $v_i$ represents a speed of an $i^{th}$ obstacle in the target obstacle set, and $w_i$ represents a weight of the $i^{th}$ obstacle in the target obstacle set.

Optionally, the weight $w_i$ of the $i^{th}$ obstacle in the target obstacle set may be determined based on one or more of a distance $d_i$ between the vehicle and the $i^{th}$ obstacle, TTC between the vehicle and the $i^{th}$ obstacle, and information about a lane in which the $i^{th}$ obstacle is located.

For example, a longer distance between the vehicle and an $i^{th}$ obstacle indicates a lower weight $w_i$, and a shorter distance between the vehicle and the $i^{th}$ obstacle indicates a higher weight $w_i$.

For example, the weight $w_i$ of the $i^{th}$ obstacle may be determined by using the following formula (3):

$$w_i = e^{(-d_i)} / \sum_{k=1}^{N} e^{(-d_k)} \qquad (3)$$

For another example, smaller TTC between the vehicle and the $i^{th}$ obstacle indicates a higher weight $w_i$, and larger TTC between the vehicle and the $i^{th}$ obstacle indicates a lower weight $w_i$.

For another example, a weight of an obstacle on a same lane as the vehicle is higher than a weight of an obstacle on a different lane from the vehicle.

S840: Control the vehicle based on the first speed.

For S840, refer to the description of S230. Details are not described herein again.

FIG. 9 is a block diagram of a control apparatus 900 according to an embodiment of this application. As shown in FIG. 9, the apparatus 900 includes: an obtaining unit 910, configured to obtain information about a first obstacle around a vehicle and first road environment information; a determining unit 920, configured to determine a first speed of the vehicle based on the information about the first obstacle and the first road environment information; and a control unit 930, configured to control the vehicle based on the first speed.

Optionally, the determining unit 920 is configured to input the information about the first obstacle and the first road environment information into a model to obtain the first speed, where the model is obtained through training based on a sample data set, and the sample data set includes information about an obstacle around a sample vehicle, road environment information around the sample vehicle, and a speed of the sample vehicle.

Optionally, the information about the first obstacle includes a speed of the first obstacle, and the determining unit 920 is configured to: determine a weight of the first obstacle based on the first road environment information and/or the information about the first obstacle; and determine the first speed based on the weight of the first obstacle and the speed of the first obstacle.

Optionally, the obtaining unit 910 is configured to: obtain information about a plurality of obstacles around the vehicle; and determine the first obstacle from the plurality of obstacles based on the first road environment information and/or information about each of the plurality of obstacles.

Optionally, the information about the first obstacle and the first road environment information are information obtained at a first moment; the obtaining unit 910 is further configured to obtain information about a second obstacle around the vehicle and second road environment information before the first moment; the determining unit 920 is further configured to obtain a second speed of the vehicle based on the information about the second obstacle and the second road environment information; and the control unit 930 is configured to: determine a third speed based on the first speed and the second speed; and control the vehicle based on the third speed.

Optionally, the control unit 930 is configured to: perform stepping processing on the first speed to obtain a fourth speed; and control the vehicle based on the fourth speed.

Optionally, the apparatus 900 further includes the determining unit, configured to: before the control unit 930 controls the vehicle based on the fourth speed, determine that the fourth speed is within a preset speed range, where the preset speed range is determined based on a speed limit value indicated by map data.

Optionally, the control unit 930 is configured to control a prompt apparatus to indicate the fourth speed.

Optionally, the obtaining unit 910 is further configured to: after preset duration starting when the first speed is obtained, obtain information about a third obstacle around the vehicle and third road environment information; the determining unit 920 is further configured to determine a fifth speed based on the information about the third obstacle and the third road environment information; and the control unit 930 is further configured to control the vehicle based on the fifth speed.

For example, the obtaining unit 910 may be the computing platform in FIG. 1, or the processing circuit, the processor, or the controller in the computing platform. For example, the obtaining unit 910 is the processor 121 in the computing platform. The processor 121 may obtain data collected by a vehicle sensor, and determine the information about the first obstacle around the vehicle and the first road environment information based on data collected by the sensor.

For another example, the determining unit 920 may be the computing platform in FIG. 1, or a processing circuit, a processor, or a controller in the computing platform. For example, the determining unit 920 is the processor 122 in the computing platform. The processor 122 may determine the first speed of the vehicle based on the information about the first obstacle around the vehicle and the first road environment information that are determined by the processor 121.

For another example, the control unit 930 may be the computing platform in FIG. 1, or the processing circuit, the processor, or the controller in the computing platform. For example, the control unit 930 is a processor 123 in the computing platform. The processor 123 may control the vehicle based on the first speed determined by the processor 122. For example, the processor 123 may generate a vehicle control instruction based on the first speed, and send the vehicle control instruction to a chassis controller. For another example, the processor 123 may control a prompt apparatus (for example, a display screen or a speaker) to prompt the user with the first speed.

The function implemented by the obtaining unit 910, the function implemented by the determining unit 920, and the function implemented by the control unit 930 may be implemented by different processors, or may be implemented by a same processor, or some functions may be implemented by a same processor. This is not limited in embodiments of this application.

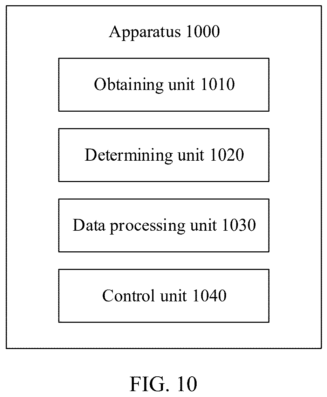

FIG. 10 is a block diagram of a control apparatus 1000 according to an embodiment of this application. As shown in FIG. 10, the apparatus 1000 includes an obtaining unit 1010, configured to obtain information about a plurality of obstacles around a vehicle; a determining unit 1020, configured to determine a target obstacle set from the plurality of obstacles based on road environment information of an environment in which the vehicle is located and/or information about each of the plurality of obstacles; a data processing unit 1030, configured to perform weighting processing on a speed of each obstacle in the target obstacle set to obtain a first speed of the vehicle; and a control unit 1040, configured to control the vehicle based on the first speed.

For example, the obtaining unit 1010 may be the computing platform in FIG. 1, or the processing circuit, the processor, or the controller in the computing platform. For example, the obtaining unit 1010 is a processor 121 in the computing platform. The processor 121 may obtain data collected by a vehicle sensor, and determine information about a plurality of obstacles around the vehicle based on the data collected by the sensor.

For another example, the determining unit 1020 may be the computing platform in FIG. 1, or a processing circuit, a processor, or a controller in the computing platform. For example, the determining unit 1020 is the processor 122 in the computing platform. The processor 122 may determine, based on road environment information of an environment in which the vehicle is located and/or the information about each of the plurality of obstacles, the target obstacle set from the plurality of obstacles obtained by the processor 121.

For another example, the data processing unit 1030 may be the computing platform in FIG. 1, or the processing circuit, the processor, or the controller in the computing platform. For example, the data processing unit 1030 is a processor 123 in the computing platform. The processor 123 may perform weighted processing on the speed of the obstacle in the target obstacle set determined by the processor 122, to determine the first speed.

For another example, the control unit 1040 may be the computing platform in FIG. 1, or the processing circuit, the processor, or the controller in the computing platform. For example, the control unit 1040 is the processor 124 in the computing platform. The processor 124 may control the vehicle based on the first speed determined by the processor 123. For example, the processor 124 may generate a vehicle control instruction based on the first speed, and send the vehicle control instruction to a chassis controller. For another example, the processor 124 may control a prompt apparatus (for example, a display screen or a speaker) to prompt the user with the first speed.

The function implemented by the obtaining unit 1010, the function implemented by the determining unit 1020, the function implemented by the data processing unit 1030, and the function implemented by the control unit 1040 may be implemented by different processors, or may be implemented by a same processor, or some functions may be implemented by a same processor. This is not limited in embodiments of this application.

It should be understood that division of the units in the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units in the foregoing apparatuses may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in the vehicle, the processing unit may be the processors 121 to 12n shown in FIG. 1.

An embodiment of this application further provides a control system. The control system includes a computing platform and one or more sensors. The computing platform includes the apparatus 900 or the apparatus 1000.

An embodiment of this application further provides a vehicle. The vehicle may include the apparatus 900 or the apparatus 1000, or include the control system.

An embodiment of this application further provides a server. The server may include the apparatus 900 or the apparatus 1000. For example, the obtaining unit 910 may obtain the data collected by the sensor of a vehicle, and determine the first road environment information and the information about the first obstacle based on the data. For another example, the control unit 930 may generate a vehicle control instruction based on the first speed, and send the vehicle control instruction to the vehicle, to control the vehicle to travel.

An embodiment of this application further provides a computer program product. The computer program product includes computer program code, and when the computer program code is run on a computer, the computer is enabled to perform the control method.

An embodiment of this application further provides a computer-readable medium. The computer-readable medium stores program code, and when the computer program code is run on a computer, the computer is enabled to perform the control method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, comprising:

   obtaining information about a first obstacle around a vehicle and first road environment information;
   determining a first speed of the vehicle based on the information about the first obstacle and the first road environment information; and
   controlling the vehicle based on the first speed.

2. The method according to claim 1, wherein the determining a first speed of the vehicle based on the information about the first obstacle and the first road environment information comprises:
   inputting the information about the first obstacle and the first road environment information into a model to obtain the first speed, wherein the model is obtained through training based on a sample data set, and the sample data set comprises information about an obstacle around a sample vehicle, road environment information around the sample vehicle, and a speed of the sample vehicle.

3. The method according to claim 1, wherein the information about the first obstacle comprises a speed of the first obstacle, and the determining a first speed of the vehicle based on the information about the first obstacle and the first road environment information comprises:

> determining a weight of the first obstacle based on the first road environment information and/or the information about the first obstacle; and
> determining the first speed based on the weight of the first obstacle and the speed of the first obstacle.

4. The method according to any one of claims 1 to 3, wherein the obtaining information about a first obstacle around a vehicle comprises:

> obtaining a plurality of obstacles around the vehicle; and
> determining the first obstacle from the plurality of obstacles based on the first road environment information and/or information about each of the plurality of obstacles.

5. The method according to any one of claims 1 to 4, wherein the information about the first obstacle and the first road environment information are information obtained at a first moment, and the method further comprises:

> obtaining information about a second obstacle around the vehicle and second road environment information before the first moment; and
> determining a second speed of the vehicle based on the information about the second obstacle and the second road environment information; and
> the controlling the vehicle based on the first speed comprises:
>
> > determining a third speed based on the first speed and the second speed; and
> > controlling the vehicle based on the third speed.

6. The method according to any one of claims 1 to 4, wherein the method further comprises:

> performing stepping processing on the first speed to obtain a fourth speed; and
> controlling the vehicle based on the fourth speed.

7. The method according to claim 6, wherein before the controlling the vehicle based on the fourth speed, the method further comprises:
determining that the fourth speed is within a preset speed range, wherein the preset speed range is determined based on a speed limit value indicated by map data.

8. The method according to claim 6 or 7, wherein the method further comprises:
controlling a prompt apparatus to indicate the fourth speed.

9. The method according to any one of claims 1 to 8, wherein the method further comprises:

> after preset duration starting when the first speed is obtained, obtaining information about a third obstacle around the vehicle and third road environment information;
> determining a fifth speed based on the information about the third obstacle and the third road environment information; and
> controlling the vehicle based on the fifth speed.

10. A control apparatus, comprising:

> an obtaining unit, configured to obtain information about a first obstacle around a vehicle and first road environment information;
> a determining unit, configured to determine a first speed of the vehicle based on the information about the first obstacle and the first road environment information; and
> a control unit, configured to control the vehicle based on the first speed.

11. The apparatus according to claim 10, wherein the information about the first obstacle comprises a speed of the first obstacle, and the determining unit is configured to:
input the information about the first obstacle and the first road environment information into a model to obtain the first speed, wherein the model is obtained through training based on a sample data set, and the sample data set comprises information about an obstacle around a sample vehicle, road environment information around the sample vehicle, and a speed of the sample vehicle.

12. The apparatus according to claim 10, wherein the determining unit is configured to: determine a weight of the first obstacle based on the first road environment information and/or the information about the first obstacle; and determine the first speed based on the weight of the first obstacle and the speed of the first obstacle.

13. The apparatus according to any one of claims 10 to 12, wherein the obtaining unit is configured to:

 obtain information about a plurality of obstacles around the vehicle; and
 determine the first obstacle from the plurality of obstacles based on the first road environment information and/or information about each of the plurality of obstacles.

14. The apparatus according to any one of claims 10 to 13, wherein the information about the first obstacle and the first road environment information are information obtained at a first moment;

 the obtaining unit is further configured to obtain information about a second obstacle around the vehicle and second road environment information before the first moment;
 the determining unit is further configured to determine a second speed of the vehicle based on the information about the second obstacle and the second road environment information; and
 the control unit is configured to:

  determine a third speed based on the first speed and the second speed; and
  control the vehicle based on the third speed.

15. The apparatus according to any one of claims 10 to 13, wherein the control unit is configured to:

 perform stepping processing on the first speed to obtain a fourth speed; and
 control the vehicle based on the fourth speed.

16. The apparatus according to claim 15, wherein the apparatus further comprises:
 the determining unit, configured to: before the control unit controls the vehicle based on the fourth speed, determine that the fourth speed is within a preset speed range, wherein the preset speed range is determined based on a speed limit value indicated by map data.

17. The apparatus according to claim 15 or 16, wherein the control unit is configured to:
 control a prompt apparatus to indicate the fourth speed.

18. The apparatus according to any one of claims 10 to 17, wherein

 the obtaining unit is further configured to: after preset duration starting when the first speed is obtained, obtain information about a third obstacle around the vehicle and third road environment information;
 the determining unit is further configured to determine a fifth speed based on the information about the third obstacle and the third road environment information; and
 the control unit is further configured to control the vehicle based on the fifth speed.

19. A control apparatus, comprising:

 the memory, configured to store a computer program; and
 a processor, configured to execute the computer program stored in the memory, so that the apparatus performs the method according to any one of claims 1 to 9.

20. A control system, comprising a sensor and a computing platform, wherein the computing platform comprises the control apparatus according to any one of claims 10 to 19.

21. A vehicle, comprising the control apparatus according to any one of claims 10 to 19, or comprising the control system according to claim 20.

**22.** A computer-readable storage medium, wherein the computer-readable storage medium stores a computer program, and when the computer program is executed by a computer, the method according to any one of claims 1 to 9 is implemented.

**23.** A chip, comprising a circuit configured to perform the method according to any one of claims 1 to 9.

Vehicle 100

Sensing system 110

Computing platform 120

| Processor 121 | Processor 122 | ... | Processor 12n |

FIG. 1

200

Obtain information about a first obstacle around a vehicle and first road environment information — S210

Determine a first speed of the vehicle based on the information about the first obstacle and the first road environment information — S220

Control the vehicle based on the first speed — S230

FIG. 2

FIG. 3

ROI region

Lane 1

Obstacle 5

Obstacle 1

Lane 2

Vehicle

Obstacle 2

Lane 3

Obstacle 3

Obstacle 4

FIG. 4

Information about
an obstacle

Model

Speed

Road environment
information

FIG. 5

FIG. 6

FIG. 7

<u>800</u>

| Obtain information about a plurality of obstacles around a vehicle | S810 |

| Determine a target obstacle set from the plurality of obstacles based on road environment information of an environment in which the vehicle is located and/or information about each of the plurality of obstacles | S820 |

| Perform weighting processing on a speed of an obstacle in the target obstacle set, to obtain a first speed of the vehicle | S830 |

| Control the vehicle based on the first speed | S840 |

FIG. 8

Apparatus 900

Obtaining unit 910

Determining unit 920

Control unit 930

FIG. 9

Apparatus 1000

Obtaining unit 1010

Determining unit 1020

Data processing unit 1030

Control unit 1040

FIG. 10

## INTERNATIONAL SEARCH REPORT

| International application No. |
|---|
| **PCT/CN2024/097456** |

**A.  CLASSIFICATION OF SUBJECT MATTER**

B60W30/18(2012.01)i;  B60W40/02(2006.01)i;  B60W40/105(2012.01)i

According to International Patent Classification (IPC) or to both national classification and IPC

**B.  FIELDS SEARCHED**

Minimum documentation searched (classification system followed by classification symbols)

IPC:  B60W

Documentation searched other than minimum documentation to the extent that such documents are included in the fields searched

Electronic data base consulted during the international search (name of data base and, where practicable, search terms used)

CNTXT, WPABSC, VEN, DWPI, ENTXTC, CJFD: 障碍物, 道路, 环境, 车速, 速度, 模型, 权重, 体验, obstacle?, road condition, environment, speed, model, weight, experience

**C.  DOCUMENTS CONSIDERED TO BE RELEVANT**

| Category* | Citation of document, with indication, where appropriate, of the relevant passages | Relevant to claim No. |
|---|---|---|
| X | CN 110316185 A (BAIDU ONLINE NETWORK TECHNOLOGY (BEIJING) CO., LTD.) 11 October 2019 (2019-10-11)<br>description, pages 4-8, and figures 1-6 | 1-23 |
| X | CN 115973179 A (BEIJING JIDU TECHNOLOGY CO., LTD.) 18 April 2023 (2023-04-18)<br>description, pages 3-15, and figures 1-13 | 1-23 |
| X | CN 116238504 A (FAW JIEFANG AUTOMOTIVE CO., LTD.) 09 June 2023 (2023-06-09)<br>description, pages 3-12, and figures 1-6 | 1-23 |
| X | CN 115339474 A (APOLLO ZHILIAN (BEIJING) TECHNOLOGY CO., LTD. et al.) 15 November 2022 (2022-11-15)<br>description, pages 2-11, and figures 1-10 | 1-23 |
| X | CN 110936955 A (UISEE TECHNOLOGY (BEIJING) CO., LTD.) 31 March 2020 (2020-03-31)<br>description, pages 4-12, and figures 1-4 | 1-23 |
| X | US 2020361489 A1 (RIDEFLUX INC.) 19 November 2020 (2020-11-19)<br>description, pages 2-10, and figures 1-7 | 1-23 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2024** | **22 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/097456** |

### C. DOCUMENTS CONSIDERED TO BE RELEVANT

| Category* | Citation of document, with indication, where appropriate, of the relevant passages | Relevant to claim No. |
|---|---|---|
| A | CN 113753077 A (BEIJING BAIDU NETCOM SCIENCE AND TECHNOLOGY CO., LTD.) 07 December 2021 (2021-12-07) entire document | 1-23 |

Form PCT/ISA/210 (second sheet) (July 2022)

**INTERNATIONAL SEARCH REPORT**
Information on patent family members

International application No.

**PCT/CN2024/097456**

| Patent document cited in search report | | | Publication date (day/month/year) | Patent family member(s) | | | Publication date (day/month/year) |
|---|---|---|---|---|---|---|---|
| CN | 110316185 | A | 11 October 2019 | None | | | |
| CN | 115973179 | A | 18 April 2023 | None | | | |
| CN | 116238504 | A | 09 June 2023 | None | | | |
| CN | 115339474 | A | 15 November 2022 | None | | | |
| CN | 110936955 | A | 31 March 2020 | None | | | |
| US | 2020361489 | A1 | 19 November 2020 | KR | 102061750 | B1 | 03 January 2020 |
| CN | 113753077 | A | 07 December 2021 | None | | | |

Form PCT/ISA/210 (patent family annex) (July 2022)

**REFERENCES CITED IN THE DESCRIPTION**

**Patent documents cited in the description**

- CN 202310945780